# EUROPÄISCHE PATENTSCHRIFT

(11) **EP 0 471 038 B1**
(45) Veröffentlichungstag und Bekanntmachung des Hinweises auf die Patenterteilung: **22.03.1995**
(21) Anmeldenummer: 90912748.2
(22) Anmeldetag: 01.09.1990
(51) Int. Cl.: H02P 3/06

(54) **STROMWENDERMOTOR**
COMMUTATOR MOTOR
MOTEUR A COLLECTEUR

(30) Priorität: 06.09.1989 DE 3929556; 17.11.1989 DE 3938241; 14.08.1990 DE 4025713
(43) Veröffentlichungstag der Anmeldung: 19.02.1992
(73) Patentinhaber: C. & E. FEIN GmbH & Co., D-70176 Stuttgart (DE)
(72) Erfinder: Rottmerhusen, Hans Hermann, W-2245 Tellingstedt (DE)
(74) Vertreter: Weller, Wolfgang, Dr.rer.nat.
(86) Internationale Anmeldenummer: DE9000665
(87) Internationale Veröffentlichungsnummer: WO9103866

(56) Entgegenhaltungen:
- EP-A- 0 266 672
- WO-A-89/06454
- DE-A- 3 636 555

## Beschreibung

Die Erfindung bezieht sich auf Stromwendermotoren gemäß dem Oberbegriff der unabhängigen Ansprüche 1 und 3.

Es ist bekannt, solche Stromwendermotoren durch sich selbst abzubremsen, indem der Motor mittels eines Umschalters umgepolt sowie kurzgeschlossen wird und somit wie ein Generator wirkt. Eine derartige Maßnahme hat erhebliche Nachteile, weil der Motor schlagartig abgebremst wird. Vor allem für Elektrowerkzeuge ist eine derartige Abbremsung des Motors nicht geeignet, es können Unfälle verursacht werden, sowie Schäden am Motor, insbesondere durch schlechte Kommutierung, und am Werkzeug auftreten.

In der DE-A 38 02 419 wird eine Bremsschaltung für Universalmotoren beschrieben, die folglich auch für den Wechselstrombetrieb vorgesehen werden kann. Dort wird, anstelle der sonst üblichen Bremswiderstände einen Teil der Feldwicklungen verwendet, wobei der durch einen Teil der Feldwicklung fließende Strom geregelt wird, um dem Bremsstrom im Sinne einer Feldschwächung entgegenzuwirken. Mittels einer Analogschaltung wird der Bremsstrom über den ganzen Bremsvorgang nahezu konstant gehalten, wobei über eine besondere Schaltungsanordnung der Bremsstrom begrenzt wird. Ein solcher Universalmotor soll vorzugsweise für Elektrohandwerkzeuge verwendet werden. Wegen der hohen spezifischen Leistung der Universalmotoren für Elektrowerkzeuge müssen hierbei hohe Drehzahlen bewältigt werden, wobei zusätzlich noch die Werkzeugschwungmassen mit zu berücksichtigen sind. Man kann hierbei nur einen schlechten Kompromiß zwischen der Bremszeit und der Kommutatorstandzeit erzielen, weil mit der bekannten Schaltungsanordnung eine Schnellabbremsung bei guter Kommutierung nicht durchführbar ist, andernfalls würde der Kollektor in kurzer Zeit durch das Bürstenfeuer bis hin zum Lichtbogen zerstört werden. Unter einer Schnellabbremsung wird hierbei verstanden, daß die Abbremszeit um etwa das 10-fache gegenüber der sonst üblichen Auslaufzeit der Maschine verkürzt wird. Außerdem gewährleistet die bekannte Schaltungsanordnung nicht, daß bei Wechselstrombetrieb die Kurzschlußbremsung immer selbstständig eingeleitet wird. Daher sind hierfür entsprechende Mittel vorgesehen, wie Widerstände und einen Kondensator.

Eine ähnliche Schaltungsanordnug zum Bremsen eines Kollektormotors geht aus der DE-A 36 36 555 hervor, auch hiermit soll im Bremsbetrieb die Felderregung soweit begrenzt werden, daß weder ein übermäßiges Kollektorfeuer noch unerwünscht hohe Bremsmomente auftreten. Um in Abhängigkeit vom Nulldurchgang der speisenden Wechselspannung den Bremsbetrieb zuverlässig aktivieren zu können, sind auch bei dieser bekannten Schaltungsanordnung Speichermittel vorgesehen, die im Motorbetrieb nachgeladen werden und im Bremsbetrieb die Selbsterregung einleiten.

Insgesamt ist bei den bekannten Schaltungsanordnungen eine Schnellabbremsung bei einer guten Kommutierung und eine zuverlässige eigenständige Selbsterregung nicht zu erzielen, weil im generatorischen Betrieb der Abbremsphase ein Wendefeld fehlt.

In dem Fachbuch " TH. Bödefeld und H. Sequenz, - Elektrische Maschinen - 6. Auflage, 1962, S. 445- 455" ist die Aufgabe der Wendepole bei Stromwendermaschinen beschrieben. Danach arbeitet in der Abbremsphase die Stromwendermaschine als ein normaler Gleichstromgenerator, und es muß bei einem Generator dieser Art auf einen Hauptpol im Umlaufsinn des Ankers ein Wendepol entgegengesetzter Polarität folgen. Im Motorbetrieb einer solchen Maschine hingegen muß auf einen Hauptpol ein Wendepol gleicher Polarität im Ankerdrehsinn folgen. Diese Voraussetzungen sollen bei einer Kurzschlußbremsung eines Stromwendermotors der eingangs genannten Art genutzt werden.

Aufgabe der Erfindung ist es, einen konstruktiv einfachen, leistungsstarken Stromwendermotor zu schaffen, der in verhältnismäßig kurzer Zeit bei guter Kommutierung durch eine Kurzschlußbremsung abgebremst werden kann, um ihn insbesondere für schnell abzubremsende Elektrowerkzeuge verwenden zu können.

Diese Aufgabe wird bei einer gattungsgemäßen Einrichtung durch die Merkmale der Patentansprüche 1 oder 3 gelöst. Vorteilhafte Ausgestaltungen ergeben sich aus den Unteransprüchen.

Die erfindungsgemäßen Lösungen haben die Vorteile, daß bei Wechselstrombetrieb eine Kurzschlußbremsung mit einer sicheren, sanften Schnellabbremsung bei guter Kommutierung einerseits erreicht wird durch die Anordnung entsprechender Wendepolfelder, und einem zwischem dem Anker und der Wendepolwicklung geschalteten Strompfad, der durch Mittel zur Begrenzung des Bremsstroms reguliert wird. Und andererseits ist der Ständer und die Schaltungsanordnung derart ausgelegt, daß bei einer Kurzschlußbremsung Wendepolfelder aus Teilbereichen der Feldpole geschaltet werden. Ein weiterer beachtlicher Vorteil ist der, daß bei Wechselstrombetrieb die Kurzschlußbremsung nicht zwangsmäßig eingeleitet werden muß, sondern daß sie selbsttätig nach dem dynamoelektrischen Prinzip eingeleitet wird.

Die Erfindung wird nachstehend anhand der Zeichnung an Ausführungsbeispielen noch näher erläutert. Dabei zeigen:
- Fig. 1: eine schematische Ansicht des Ständers und des Ankers eines Stromwendermotors mit einer einteiligen Polanordnung und Wendepolen,
- Fig. 2: eine Schaltungsanordnung für einen solchen Stromwendermotor mit Einrichtungen für eine Kurzschlußbremsung und für eine Drehrichtungsumschaltung,
- Fig. 3: eine gegenüber Fig. 2 vereinfachte Schaltungsanordnung ohne Drehrichtungsumschaltung mit der Angabe der Fließrichtung der elektrischen Ströme im Motor- und Bremsbetrieb,
- Fig. 4: eine weitere schematische Ansicht des Ständers und des Ankers eines Stromwendermotors mit Polanordnungen aus je zwei Polteilen und jeweils zwei Wicklungen,
- Fig. 5: eine weitere Schaltungsanordnung für eine Kurzschlußbremsung eines Stromwendermotors mit Wendepolen, die aus einem Teilbereich der Feldpole gebildet sind,
- Fig. 6: eine schematische Ansicht des Ständers und des Ankers eines Stromwendermotors mit Polanordnungen aus je zwei Polteilen, bestehend aus einem elektrisch erregbaren Pol und einem permanentmagnetischen Pol.

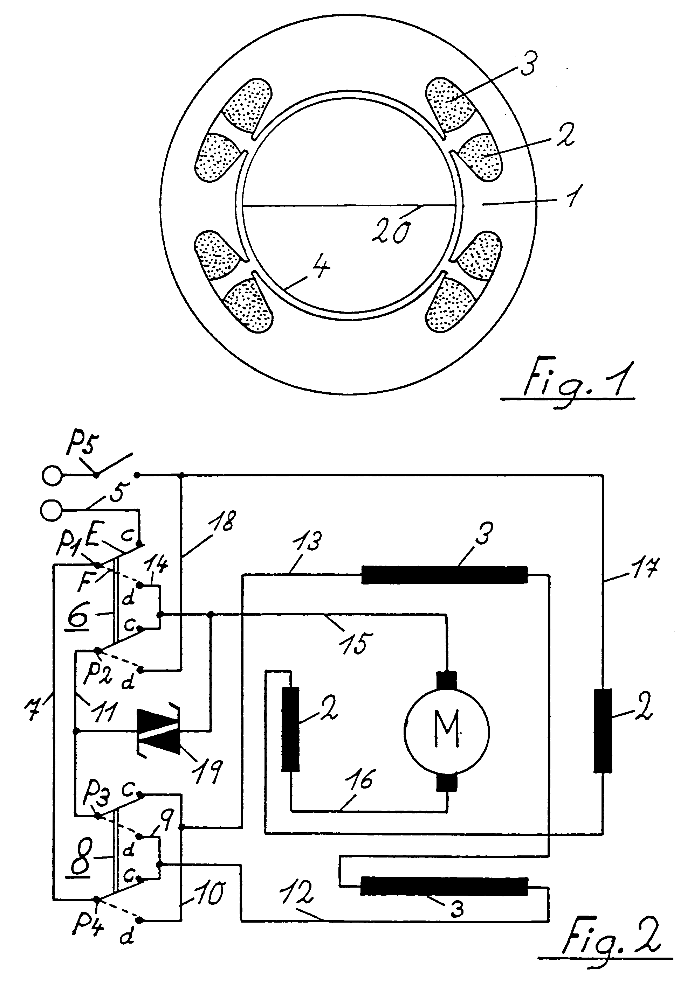

Fig. 1 zeigt einen Ständer mit Wendepolen 1, einer Wendepolwicklung 2 und einer Feldwicklung 3, so wie er üblicherweise bei Stromwendermotoren Verwendung findet. Der Kreis 4 symbolisiert in den Figuren den Anker und die Drehrichtung ist durch einen Pfeil gekennzeichnet.

Soll der Stromwendermotor durch eine Kurzschlußbremsung abgebremst werden, so ist es erforderlich, den Motor kurzzuschließen und die Feldwicklung 3 umzupolen.

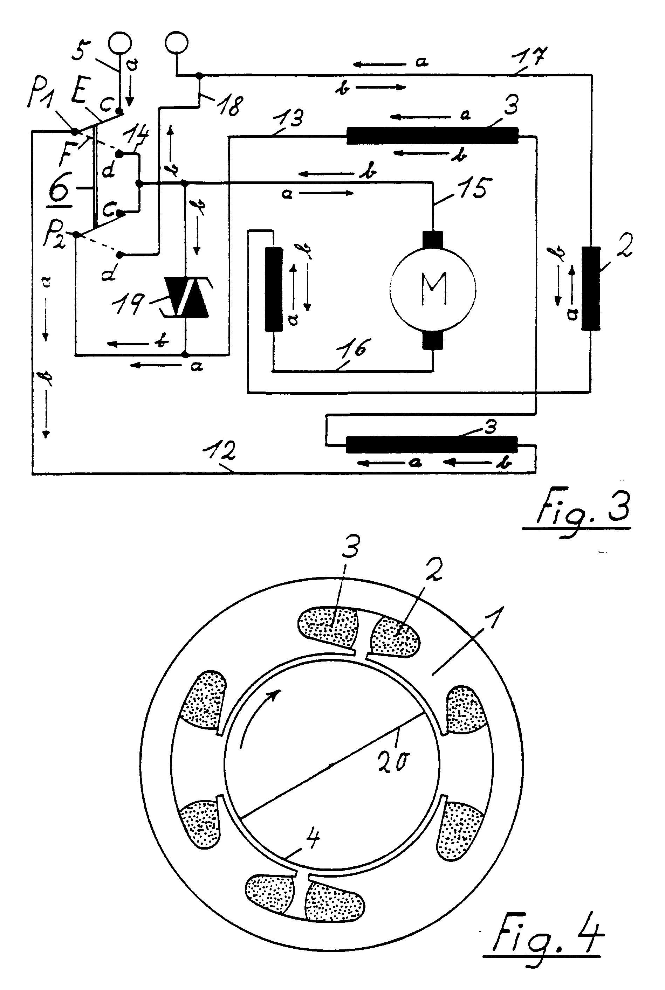

In Fig. 2 ist eine Schaltungsanordnung für eine sanfte Schnellabbremsung mit einer Drehrichtungsumschaltung dargestellt. Der Stromwendermotor ist als Universalmotor ausgelegt und seine Schaltung ist folgendermaßen:

Die eine Leitung 5 des Netzanschlusses führt zum Aus- und Umschalter 6, dort an den Kontaktpunkt c des Schaltgliedes P 1. Das Schaltglied P 1 ist durch eine Brücke 7 mit dem Schaltglied P 4 des Umschalters 8 für die Drehrichtungsumkehr verbunden. Beim Umschalter 8 ist der Kontaktpunkt c des Schaltgliedes P 4 durch eine Brücke 9 mit dem Kontaktpunkt d des Schaltgliedes P 3 und der Kontaktpunkt d des Schaltgliedes P 4 ist durch eine Brücke 10 mit dem Kontaktpunkt c des Schaltgliedes P 3 verbunden, wobei das Schaltglied P 3 mit dem Schaltglied P 2 des Aus- und Umschalters 6 durch eine Brücke 11 verbunden ist. Die Feldwicklung 3 ist mit des einen Drahtende 12 an die Brücke 9 und mit dem anderen Drahtende 13 an die Brücke 10 des Umschalters 8 angeschlossen, hierbei sind die Feldwicklungsteile der beiden Feldpole in Reihe geschaltet. Der Kontaktpunkt c des Schaltgliedes P 2 ist durch eine Brücke 14 mit dem Kontaktpunkt d desSchaltgliedes P 1 des Aus- und Umschalters 6 verbunden. An die Brücke 14 ist die eine Bürste mittels einer Anschlußleitung 15 angeschlossen, wobei die andere Bürste mit dem einen Drahtende 16 der Wendepolwicklung verbunden ist und das andere Drahtende 17 der Wendepolwicklung fuhrt zum Netzanschluß. Dieses Drahtende 17 ist durch eine Brücke 18 an den Kontaktpunkt d des Schaltgliedes P2 des Aus- und Umschalters 6 angeschlossen, hierbei sind die Wendepolwicklungsteile der Wendepole in Reihe geschaltet.

Um eine sanfte Schnellabbremsung zu erreichen, bei der die Abbremszeit des Ankers um etwa das Zehnfache verkürzt ist gegenüber der natürlichen Auslaufzeit des Ankers, ist es erforderlich, den Bremsstrom zu regulieren, außerdem muß ein entsprechendes Wendefeld für eine gute Kommutierung vorhanden sein. Bei Wechselstrombetrieb muß außerdem noch gewährleistet sein, daß eine sichere und sanfte Schnellabbremsung in jedem Punkt oder Abschnitt der Netzspannungskurve erfolgt.

Dazu ist zur Begrenzung des Bremsstromes in der Ausschaltstellung F (gestrichelte Linien), in der die Kurzschlußbremsung selbsttätig nach dem dynamoelektrischen Prinzip eingeleitet wird, ein Strompfad zwischen dem Anker und der Wendepolwicklung 2 vorgesehen, der durch zwei in Wechselrichtung parallel geschaltete Zenerdioden 19 eingestellt wird. Hierdurch wird erreicht, daß nur ein vorbestimmter Anteil des Bremsstromes über die Feldwicklung 3 fließt, somit das Erregerfeld mittels der Zenerdiode 19 begrenzt wird, womit das Abbremsmoment und die Zeitdauer der Abbremsung genau bestimmt werden kann. Der gesamte Bremsstrom fließt über die Wendepolwicklung und bewirkt ein entsprechendes Wendefeld für eine gute Kommutierung.

Der Strompfad zwischen dem Anker und der Wendepolwicklung kann auch durch andere Mittel beeinfußt werden.

In Fig. 3 ist das Grundprinzip des Schaltplans für einen Stromwendermotor mit einer sanften Schnellabbremsung dargestellt, wobei die Schaltungsanordnung nur für eine bestimmte Drehrichtung ausgelegt ist.

Der Stromwendermotor wird auch hier durch einen zweipoligen Aus- und Umschalter 6 bedient. Das eine Drahtende 12 der Feldwicklung 3 ist mit dem Schaltglied P 1 und das andere Drahtende 13 der Feldwicklung 3 ist mit dem Schaltglied P 2 verbunden. Der Anker und das Netz sind wie beim Beispiel nach Fig. 2 an die Kontaktpunkte c und d angeschlossen. Um die Wege der elektrischen Ströme im Schaltplan zu verdeutlichen, sind die Ströme durch Pfeile dargestellt. Die Fließrichtung aus dem Netz ( im Motorbetrieb) ist mit a und die Fließrichtung des Bremsstroms (im Generatorbetrieb) ist mit b bezeichnet.

In der Schaltstellung E (Motorbetrieb) fließt der Strom vom Netzanschluß über das Schaltglied P 1 zur Feldwicklung 3, von dort über das Schaltglied P 2 zum Anker, vom Anker zu der Wendepolwicklung 2 und von dort zum Netzanschluß. Folglich liegt der Anker zwischen der Feldwicklung 3 und der Wendepolwicklung 2.

In der Schaltstellung F (Generatorbetrieb=Bremsbetrieb) fließt der Anteil des Bremsstroms, der durch die Zenerdiode 19 gesperrt wird, vom Anker über das Schaltglied P 1 zur Feldwicklung 3, von der Feldwicklung 3 über das Schaltglied P 2 zu der Wendepolwicklung 2 und von dort zum Anker. Der Anteil des Bremsstromes, der nicht durch die Zenerdioden gesperrt wird, fließt vom Anker über die Zenerdiode 19 und über das Schaltglied P 2 zu der Wendepolwicklung 2 und von dort zurück zum Anker.

Ist der Stromwendermotor nur für eine bestimmte Drehrichtung ausgelegt, so ist es vorteilhaft, daß die Wendepole 1 gegen die einzige Motordrehrichtung verschoben unmittelbar benachbart der ablaufenden Kante des jeweils vorhergehenden Feldpoles angeordnet sind und zur Anlaufkante des nachfolgenden Feldpoles einen größeren Abstand als zumvorhergehenden Feldpol aufweisen. Die Polfeldmitte 20 des Ankers ist zur geometrisch neutralen Zone 22 also über die Wendepolmitte hinaus zur auflaufenden Kante der Feldpole hin ausgerichtet, wodurch die Wendepole 1 ein Drehmoment sowohl in der Motorbetriebsphase als auch in der Abbremsphase bewirken. Somit besitzt der Ständer Polanordnungen aus je zwei Polteilen.

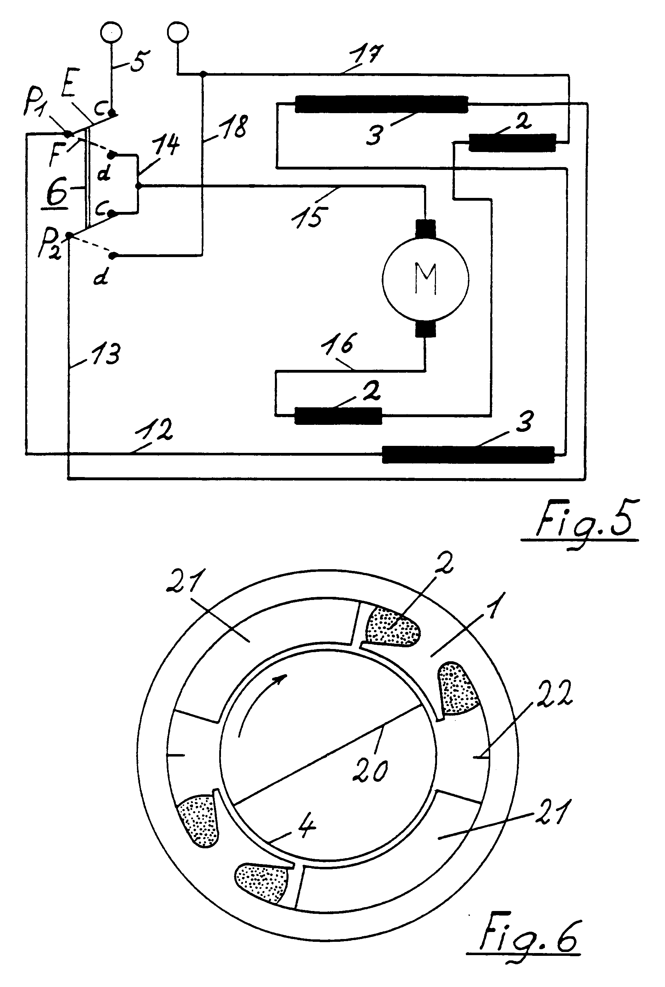

Fig. 4 zeigt eine solche Anordnung, und in Fig. 5 ist hierfür die entsprechende Schaltungsanordnung dargestellt, die der Schaltungsanordnung von Fig. 4 bis auf die Zenerdiode 19 entspricht.

Nach der Auslegung des Ständers gem. Fig. 4 und der Schaltungsanordnung von Fig. 5 kann auf einen Strompfad und somit auf Zenerdioden zwischen dem Anker und der Wendepolwicklung 2 verzichtet werden, da in der Abbremsphase die Wendepole 1 ein Drehmoment und die Feldpole ein Bremsmoment hervorrufen, wobei das Wendefeld sich mit dem Erregerfeld im Sinne einer Feldschwächung überlagert.

Soll nun bei einer Kurzschlußbremsung ein etwa gleichbleibendes Abbremsmoment in allen Drehbereichen bis zum Ankerstillstand erreicht werden, so ist es erforderlich, hierfür ein konstantes Erregerfeld vorzusehen. Dieses Erfordernis wird vorteilhaft durch Permanentmagnete gelöst.

In Fig. 6 ist eine derartige Lösung dargestellt. Der Ständer weist Polanordnungen aus je zwei Polteilen auf, wobei der eine Polteil aus einem Magnetsegment 21 gebildet wird und zur Felderregung dient. Der andere Polteil stellt den Wendepol 1 dar, der elektromagnetisch erregt wird. Die Anordnung der Wendepole zu den Magnetsegmenten 21 erfolgt genauso, wie die Anordnung der Wendepole zu den Feldpolen in Fig. 4, entsprechendes gilt für die Ausrichtung der Polfeldmitte 20 des Ankers.

Die Kurzschlußbremsung wird durch das Kurzschließen des Motors in der Ausschaltstellung eingeleitet, wobei auch hier in der Abbremsphase die Wendepole ein Drehmoment und die Feldpole ein Bremsmoment hervorrufen, indem das Wendefeld sich mit dem Erregerfeld im Sinne einer Feldschwächung überlagert. Da das Erregerfeld, welches durch die Magnetsegmente 21 gebildet wird, immer konstant ist, wird ein etwa gleichmäßiges Abbremsmoment erzielt. Für eine sanfte Schnellabbremsung und eine gute Kommutierung werden keine sonstigen Mittel benötigt.

Der Polteil, der durch das Permanentmagnetsegment 21 gebildet wird, kann grundsätzlich auch als ein elektromagnetisch erregter Polteil ausgelegt sein, der dann im Nebenschluß geschaltet ist.

Ist es erforderlich, daß der Bremsstrom bei den dargestellten Ausführungsbeispielen der Fig. 4 - 6 reguliert werden muß, so wird zwischen dem Anker und der Wendepolwicklung bzw. dem Wicklungsteil, der in der Abbremsphase zur Erregung des Wendefeldes dient, ein Strompfad geschaltet, der Mittel zur Begrenzung des Bremsstroms aufweist.

Um die Schaltmittel bei schnellem Hin- und Herschalten von der Betriebsphase zur Bremsphase und zurück vor einer Zerstörung durch den Lichtbogen, der hierbei an den Schaltkontakten entstehen könnte, zu bewahren, ist es vorteilhaft, wenn bei einer Kurzschlußbremsung der Stromwendermotor mindestens einseitig durch ein Schaltglied P 5 vom Netz getrennt wird, bevor die Schaltkontakte des Umschalters 6 betätigt werden, und daß ferner die Schaltvorgänge bei Inbetriebnahme des Stromwendermotors in umgekehrter Reihenfolge vorgenommen werden ( Fig. 2).

## Patentansprüche

1. Stromwendermotor im Reihenschluß mit Wendepolen sowie mit Schalteinrichtungen (P₁, P₂, P₃, P₄) zur Umschaltung zwischen Motor- und Bremsbetrieb, wobei im Bremsbetrieb mittels der Schalteinrichtungen der Motor kurzgeschlossen und die Feldwicklung umgepolt wird, und mit Mitteln (19) zur Begrenzung des Bremsstroms durch die Feldwicklung, mit denen bei Wechselstrombetrieb eine sanfte und schnelle Kurzschlußbremsung durch eigenständige Selbsterregung durchgeführt werden kann, dadurch gekennzeichnet, daß der Anker (4) in der Motorbetriebsphase zwischen der Feldwicklung (3) und der Wendepolwicklung (2) geschaltet ist, und daß in der Bremsphase zur Begrenzung des Bremsstroms durch die Feldwicklung ein Strompfad zwischen dem Anker (4) und der Wendepolwicklung (2) geschaltet wird, der die Mittel (19) zur Begrenzung des Bremsstroms enthält, so daß nur ein vorbestimmter Anteil des Bremsstroms über die Feldwicklung fließt.

2. Stromwendermotor nach Anspruch 1, dadurch gekennzeichnet, daß der Strompfad (2) zwei zueinander antiparallel angeordnete Zehnerdioden (19) aufweist, um den Bremsstrom zu begrenzen.

3. Stromwendermotor mit Wendepolen und Schalteinrichtungen (P₁, P₂, P₃, P₄) zur Umschaltung zwischen Motor- und Bremsbetrieb, mit denen bei Wechselstrom- oder Gleichstrombetrieb eine sanfte und schnelle Kurzschlußbremsung durch eigenständige Selbsterregung durchgeführt werden kann, dadurch gekennzeichnet, daß der Ständer derart aufgebaut ist, daß die Wendepole aus einem Teilbereich der Feldpole gebildet sind, wobei mittels der Schalteinrichtung (P₁, P₂, P₃, P₄) im Bremsbetrieb der Ständer so geschaltet ist, daß in der Bremsphase Wendepolfelder aus einem Teilbereich der Feldpole geschaltet sind, und daß die Wendepolfelder ein Drehmoment und die Feldpole ein Bremsmoment hervorrufen, wobei das Wendefeld sich mit dem Erregerfeld im Sinne einer Feldschwächung überlagert.

4. Stromwendermotor nach Anspruch 3, dadurch gekennzeichnet, daß der Ständer Polanordnungen aus je zwei Polteilen aufweist, einen Feldpol und einen Wendepol (1) mit jeweils einer Wicklung oder einem permanentmagnetischen Feldpol, der durch ein Magnetsegment (21) gebildet wird, und einen Wendepol (1) mit einer Wicklung, wobei der Wendepol gegen die einzige Motordrehrichtung verschoben unmittelbar benachbart der ablaufenden Kante des vorhergehenden Feldpoles angeordnet ist und zur Anlaufkante des nachfolgenden Feldpoles einen größeren Abstand als zum vorhergehenden Feldpol aufweist, und daß die Polfeldmitte (20) des Ankers zur geometrischen neutralen Zone (22), also über die Wendepolmittel hinaus in Richtung zur auflaufenden Kante der Feldpole hin ausgerichtet ist.

5. Stromwendermotor nach Anspruch 3 und 4, dadurch gekennzeichnet, daß zwischen dem Anker (4) und der Wendepolwicklung (2) bzw. dem Wicklungsteil, der in der Bremsphase zur Erregung des Wendefeldes dient, ein Strompfad geschaltet ist, der Mittel (19) zur Begrenzung des Bremsstroms aufweist.

6. Stromwendermotor nach Anspruch 1 oder 3, dadurch gekennzeichnet, daß bei einer Kurzschlußbremsung der Stromwendermotor mindestens einseitig durch ein Schalteglied (P₅) vom Netz getrennt wird, wobei die Schaltkontakte des Umschalters (6) betätigt werden, und daß die Schaltvorgänge bei Inbetriebnahme des Stromwendermotors in umgekehrter Reihenfolge erfolgen.

7. Stromwendermotor nach einem der vorhergehenden Ansprüche, dadurch gekennzeichnet, daß der Polteil, der das Erregerfeld bildet, durch eine Wicklung erregt wird, die im Nebenschluß geschaltet ist.

## Claims

1. Commutator motor connected in series with commutating poles and with switching devices (P₁, P₂, P₃, P₄) for switching between motor and braking operation, wherein in braking operation the motor is short-circuited and the field winding reversed in polarity by means of the switching devices, and with means (19) for limiting the braking current by means of the field winding with which in alternating current mode a gentle and rapid short-circuit braking can be carried out by autonomous self-excitation, characterised in that the armature (4) is in the motor operation phase connected between the field winding (3) and the commutating pole winding (2), and that in the braking phase, in order to limit the braking current by means of the field winding, a current path is connected between the armature (4) and the commutator pole winding (2) which contains the means (19) for limiting the braking current, so that only a predetermined component of the braking current flows through the field winding.

2. Commutator motor according to claim 1, characterised in that the current path (2) comprises two Zehner diodes (19) arranged antiparallel to one another in order to limit the braking current.

3. Commutator motor with commutating poles and switching devices (P₁, P₂, P₃, P₄) for switching between motor and braking operation, with which in alternating current or direct current operation a gentle and rapid short-circuit braking can be carried out by autonomous self-excitation, characterised in that the stator is constructed in such a way that the commutating poles are formed from a portion of the field poles, wherein in braking operation the stator is connected by means of the switching device (P₁, P₂, P₃, P₄) in such a way that in the braking phase commutating pole fields from a portion of the field poles are connected, and that the commutating pole fields cause a turning moment and the field poles a braking moment, wherein the commutating field overlaps with the exciting field after the manner of a field weakening.

4. Commutator motor according to claim 3, characterised in that the stator comprises pole arrangements each consisting of two pole parts, a field pole and a commutating pole (1) with respectively a winding or a permanent magnetic field pole, which is formed by a magnetic segment (21), and a commutating pole (1) with a winding, wherein the commutating pole is disposed displaced in reverse direction to the single direction of rotation of the motor and directly adjacent to the leaving edge of the preceding field pole and exhibits a greater distance from the entering edge of the subsequent field pole than from the preceding field pole, and that the pole field centre (20) of the armature is aligned towards the geometric neutral zone (22), that is to say beyond the commutating pole means in the direction of the leading edge of the field poles.

5. Commutator motor according to claims 3 and 4, characterised in that between the armature (4) and the commutating pole winding (2) or the winding part which serves in the braking phase for the excitation of the commutating field there is connected a current path which comprises means (19) for limiting the braking current.

6. Commutator motor according to claim 1 or 3, characterised in that during a short-circuit braking the commutator motor is disconnected from the mains on at least one side by a switching member (P₅), wherein the switch contacts of the commutator (6) are activated, and that the switching operations take place in reverse sequence on the start-up of the commutator motor.

7. Commutator motor according to any one of the preceding claims, characterised in that the pole part which forms the exciting field is excited by a winding which is shunt-connected.

## Revendications

1. Moteur à collecteur, monté en série, comportant des pôles de commutation ainsi que des dispositifs de commutation (P₁, P₂, P₃, P₄) , en vue de la commutation entre le mode de moteur et le mode de freinage, le moteur étant, en mode freinage, court-circuité au moyen des dispositifs de commutation et les pôles de l'enroulement de champ étant inversés, et comportant des moyens (19) destinés à limiter le courant de freinage à travers la bobine d'inducteur, grâce auxquels, en fonctionnement en courant alternatif, il est possible de produire un freinage en court-circuit doux et rapide, par auto-excitation indépendante, caractérisé en ce que l'induit (4) est monté, dans la phase de mode moteur, entre l'enroulement de champ (3) et l'enroulement de commutation (2), et en ce que dans la phase de freinage, pour limiter le courant de freinage à travers l'enroulement de champ, il est prévu un trajet de courant entre l'induit (4) et l'enroulement de commutation (2), qui contient les moyens (19) destinés à limiter le courant de freinage, de sorte que seule une proportion prédéterminée du courant de freinage circule à travers l'enroulement de champ.

2. Moteur à collecteur selon la revendication 1, caractérisé en ce que le trajet de courant (2) comporte deux diodes Zener (19) disposées entre elles de manière antiparallèle, pour limiter le courant de freinage.

3. Moteur à collecteur comportant des pôles de commutation et des dispositifs de commutation (P₁, P₂, P₃, P₄) pour la commutation entre le mode moteur et le mode freinage, avec lesquels il est possible en courant alternatif ou en courant continu de produire un freinage en court-circuit, doux et rapide, par auto-excitation indépendante, caractérisé en ce que le stator a une construction telle que les pôles de commutation sont formés par une zone partielle des pôles de champ, les dispositifs de commutation (P₁, P₂, P₃, P₄) alimentent le starter, en mode freinage, de manière que dans la phase de freinage des champs de pôles de commutation soient engendrés à partir d'une zone partielle des pôles de champ, et en ce que les champs des pôles de commutation provoquent un couple de rotation et les pôles de champ un couple de freinage, le champ de commutation se superposant au champ d'excitation, au sens d'un affaiblissement du champ.

4. Moteur à collecteur selon la revendication 3, caractérisé en ce que le stator comporte des agencements de pôles faits de deux parties de pôle, à savoir un pôle de champ et un pôle de commutation (1), chacun avec un enroulement ou un pôle de champ à aimantation permanente, qui est formé par un segment d'aimant (21) et un pôle de commutation (1) avec un enroulement, le pôle de commutation, décalé en sens inverse du seul sens de rotation du moteur, étant situé directement à proximité du bord de sortie du pôle de champ précédent et présentant, par rapport au bord d'entrée du pôle de champ suivant, une plus grande distance que par rapport au pôle de champ précédent, et en ce que le milieu du champ polaire (20) de l'induit est orienté vers la zone neutre géométrique (22), c'est-à-dire au-delà des pôles de commutation, en direction du bord d'entrée des pôles de commutation.

5. Moteur à collecteur selon les revendications 3 et 4, caractérisé en ce qu'entre l'induit (4) et l'enroulement des pôles de commutation (2) ou la partie d'enroulement qui sert dans la phase de freinage à l'excitation du pôle de commutation, il est prévu un trajet de courant qui contient des moyens (19) destinés à limiter le courant de freinage.

6. Moteur à collecteur selon la revendication 1 ou 3, caractérisé en ce que dans le cas d'un freinage en court-circuit le moteur à collecteur est séparé du réseau au moins d'un côté par un organe de commutation (P₅), les contacts de commutation du commutateur (6) étant alors actionnés, et en ce que les opérations de commutation s'effectuent en sens inverse, lors de la mise en service du moteur à collecteur.

7. Moteur à collecteur selon l'une des revendications précédentes, caractérisé en ce que la partie de pôle, qui forme le champ d'excitation, est excitée par un enroulement qui est monté en dérivation.
